# EUROPÄISCHE PATENTSCHRIFT

(11) **EP 0 938 970 B1**
(45) Veröffentlichungstag und Bekanntmachung des Hinweises auf die Patenterteilung: **06.05.2004**
(21) Anmeldenummer: 99103486.9
(22) Anmeldetag: 23.02.1999
(51) Int. Cl.: B32B 15/08, C08L 27/18, C08K 3/00

(54) **Verbundlager-Werkstoff mit Kunststoff-Gleitschicht**
Bearing material with a plastic gliding layer
Matériau pour relier comportant une couche de glissement synthétique

(30) Priorität: 28.02.1998 DE 19808541
(43) Veröffentlichungstag der Anmeldung: 01.09.1999
(73) Patentinhaber: Federal-Mogul Wiesbaden GmbH & Co.KG, 65201 Wiesbaden (DE)
(72) Erfinder: Adam, Achim, Dr., 64569 Nauheim (DE)
(74) Vertreter: Fuchs Mehler Weiss & Fritzsche, Patentanwälte

(56) Entgegenhaltungen:
- EP-A- 0 939 106
- WO-A-95/02772
- WO-A-97/03299
- DE-A- 4 227 909
- US-A- 5 618 873
- DATABASE WPI Section Ch, Week 199423 Derwent Publications Ltd., London, GB; Class A14, AN 1994-186541 XP002173171 & JP 06 122887 A (DAIDO METAL KOGYO KK), 6. Mai 1994 (1994-05-06)
- DATABASE WPI Section Ch, Week 199601 Derwent Publications Ltd., London, GB; Class A23, AN 1996-007567 XP002173174 & JP 07 287467 A (NTN CORP), 31. Oktober 1995 (1995-10-31)
- DATABASE WPI Section Ch, Week 199410 Derwent Publications Ltd., London, GB; Class A23, AN 1994-080123 XP002173175 & JP 06 032978 A (OILESS IND CO LTD), 8. Februar 1994 (1994-02-08)
- DATABASE WPI Section Ch, Week 198405 Derwent Publications Ltd., London, GB; Class A14, AN 1984-026854 XP002173185 & JP 58 217549 A (STAR LIGHT KOGYO), 17. Dezember 1983 (1983-12-17)

## Beschreibung

Die Erfindung betrifft einen Schichtverbundwerkstoff mit einer metallischen Stützschicht, einer porösen Zwischenschicht und einer darauf aufgebrachten Gleitschicht aus PTFE oder PTFE in Kombination mit anderen Fluorthermoplasten, deren Schmelzpunkt über 260°C liegt, in die Füllstoffe eingelagert sind.

Obwohl solche Werkstoffe auch problemlos in ungeschmierten Fällen eingesetzt werden können, soll der erfindungsgemäße Schichtverbundwerkstoff insbesondere für solche Lagerungen unter Anwesenheit von Öl geeignet sein, für die ein sehr niedriger Reibungskoeffizient bei gleichzeitig hoher Verschleiß- und Kavitationsbeständigkeit von großer Bedeutung ist, wie z.B. in Stoßdämpfern, die in der Automobilindustrie eingesetzt werden oder auch in Zahnradpumpen oder hydraulischen Motoren. Aufgrund der erforderlichen Reibungskoeffizienten müssen solche Werkstoffe nach heutigem Kenntnisstand zu einem großen Teil aus PTFE bestehen, da alle anderen bekannten, wenn auch in ihren sonstigen Eigenschaften geeigneten Kunststoffe nicht diesen Ansprüchen genügen.

Da PTFE alleine zu weich ist, und daher einen hohen Verschleißkoeffizienten aufweist, müssen Materialien beigemischt werden, die die Kavitation und dem Verschleiß entgegenwirken, ohne den Reibungskoeffizienten wesentlich zu erhöhen.

Die am häufigsten im genannten Anwendungsbereich gebrauchten Lagerwerkstoffe bestehen aus Stahlrücken, poröser Bronzeschicht und einem Kunststoffmaterial, das zu ca. 80 Vol.-% aus PTFE und zum Rest aus Blei oder Molybdändisulfid besteht. Das Kunststoffmaterial ist dabei in das Bronzegerüst eingedrückt und bildet darüber eine dünne geschlossene Schicht. Materialien dieses Aufbaus neigen allerdings unter extremen Bedingungen, wie z.B. in Stoßdämpfern, durch hohe Lasten, hohe Gleitgeschwindigkeiten und Beschleunigungen und hohe Strömungsgeschwindigkeiten im Lagerspalt zu Erosions- und Kavitationserscheinungen, und haben daher, besonders bei hoher Beanspruchung, nur eine begrenzte Lebensdauer.

Es ist zwar möglich, Werkstoffe herzustellen die unter den beschriebenen Bedingungen kaum Verschleiß und keinerlei Kavitationsanfälligkeit aufweisen, wenn man anstelle des PTFE einen anderen thermoplastischen Werkstoff wie beispielsweise PVDF oder PEEK einsetzt, jedoch muß in solchen Fällen eine deutliche Erhöhung der Reibung bei Ölschmierung in Kauf genommen werden.

In vielen Schriften werden Zusammensetzungen auf PTFE-Basis vorgeschlagen, die bislang jedoch nur vergleichsweise geringe Verbesserungen gegenüber den oben genannten Standardwerkstoffen darstellen, und dabei meist einen erhöhten Reibwert aufweisen, wie im Falle des Calciumfluorid in der EP 0 183 375 oder der Polyimide, die in der DE 42 27 909 C2 vorgeschlagen werden.

In der GB 2272029 A wird eine erhöhte Kavitationsbeständigkeit auf eine besonders hohe spezifische Oberfläche eines eingesetzten Bleipulvers zurückgeführt. Jedoch wird die Verwendung von Blei oder Bleiverbindungen von den Anwendern der Gleitelemente zunehmend kritischer betrachtet und stellt deshalb keine völlig befriedigende Lösung dar.

Die Möglichkeit der Verwendung von Poly-(p-phenylenterephthalamid) als Füllstoff in selbstschmierenden Lagerwerkstoffen auf PTFE-Basis wird zwar oft erwähnt, jedoch ausnahmslos in der Form von Fasern, wie z.B. in der GB 2291879 A.

Die WO 95/02772 beschreibt einen besonderen fibrillierten Fasertyp, der in die PTFE-Matrix eingearbeitet wird. Die Faserform bedingt Probleme bei der homogenen Einmischung in die PTFE-Matrix und erfordert entsprechende Sondereinrichtungen in der Produktion. Solche Fasern haben darüber hinaus den Nachteil, daß sie lungengängige Anteile enthalten und unter dem Verdacht stehen, krebserregend zu sein.

Die Fasern werden als eine Art unregelmäßiges Flechtwerk in die Matrix eingelagert und schwächen so Zerrüttung und Erosion der ansonsten weichen PTFE-Matrix ab.

Auch als neutrales Element in Faserform und austauschbar gegen andere Fasern und daher offenbar nicht zwingend notwendig zur Erzielung einer bestimmten Eigenschaft tauchen Aramidfasern immer wieder auf, wie z.B. in der WO 97/03299 oder der GB 2177099 A.

Ein wesentlicher Grund für die Eignung und Verwendung von solchen Fasern sind die außergewöhnlichen mechanischen Kennwerte - sehr hohe Zugfestigkeit und E-Modul -, die auf der besonders hohen molekularen Orientierung in Faserlängsrichtung sowie der starken physikalischen Parallelverknüpfung der einzelnen starren Molekülstränge basieren.

Aufgabe der Erfindung ist es, einen Schichtverbundwerkstoff bereitzustellen, der ohne Änderung des Produktionsprozesses und ohne Beeinträchtigung des Reibwertes unter Öl eine höhere Verschleiß- und Delaminationsbeständigkeit aufweist.

Diese Aufgabe wird mit einem Schichtverbundwerkstoff gelöst, bei dem die Gleitschicht mindestens ein pulverförmiges Polyaramid enthält und bei dem der Anteil des PTFE oder des PTFE zusammen mit den anderen Fluorthermoplasten 55-90 Vol.-%, der Anteil weiterer Füllstoffe 9,5-44,5 Vol.-% und der Anteil des Polyaramids 0,5-10 Vol.-% beträgt.

Überraschenderweise hat sich gezeigt, daß der Zusatz dieser vergleichsweise geringen Mengen an Polyaramidpulver geeignet ist, die Zerrüttung der Gleitschichtoberfläche aufgrund von Erosions- und Kavitationserscheinungen gegenüber den entsprechenden zusatzfreien Zusammensetzungen stark abzuschwächen. Im Einsatz ohne Anwesenheit von Schmierstoffen schneiden die erfindungsgemäßen Schichtverbundwerkstoffe dagegen gleich oder unwesentlich verbessert ab.

Vorteilhafterweise beträgt der Anteil des PTFE oder des PTFE zusammen mit den anderen Fluorthermoplasten 65-80 Vol.-%, der Anteil weiterer Füllstoffe 10-34 Vol.-% und der Anteil des Polyaramids 2-10 Vol.-%.

Vorzugsweise handelt es sich bei den Polyaramiden um Poly-(pphenylenterephthalamid) (PPTA) und/oder Poly-(p-benzamid) (PBA), die eine hohe molekulare Steifigkeit aufweisen.

Die Korngröße des Polyaramidpulvers liegt vorzugsweise unter 100 µm. Vorteilhafterweise ist die Korngröße des Polyaramidpulvers < 50 µm.

Als weitere Füllstoffe sind besonders Blei, Bleioxid, Metallsulfide mit Schichtstruktur wie Molybdänsulfid, Metallfluoride, Bornitrid, Graphit, Ruß, Koks, Eisenoxid, einzeln oder zu mehreren geeignet.

Zusätzlich zu den bereits genannten Füllstoffen können noch Füllstoffe aus einem oder mehreren aus der Gruppe der Hartstoffe, der Pigmente, der Fasermaterialien, der Festschmierstoffe, der Duro- oder Hochtemperaturthermoplaste, der Polyimide oder der Duroplaste eingesetzt werden.

Eine bevorzugte Füllstoffkombination besteht aus Metallsulfiden mit Schichtstruktur, hexagonalem Bornitrid und Eisen(III)oxid.

Wenn Fe₂O₃ in Kombination mit einem anderen Füllstoff enthalten ist, beträgt der Anteil vorzugsweise 1-6 Vol.-%.

Wenn außer dem PTFE noch andere Fluorthermoplaste als Matrixmaterial verwendet wird, so sind vorteilhafterweise PFA, FEP, ETFE oder EPE geeignet. Ihr Anteil darf höchstens gleichgroß sein wie der des PTFE.

Eine bevorzugte Verwendung des Schichtverbundwerkstoffes ist für Gleitelemente für den Einsatz in Stoßdämpfern oder anderen hydraulischen Anwendungen.

Beispielhaft sind mögliche Ausführungsformen den entsprechenden Materialien ohne Zusatz von Poly-(p-phenylenterephthalamid)-Pulver oder Poly-(pbenzamid)-Pulver gegenübergestellt. Die Zusammensetzungen sind in der Tabelle 1 angegeben.

**Tabelle 1**

| **Beispiel Nr.** | **Zusammensetzung Vol.-%** |
|---|---|
| 1 | PTFE 80 MoS₂15 PPTA 5 |
| 2 | PTFE 80 MoS₂ 20 |
| 3 | PTFE 80 Graphit 15 PPTA 5 |
| 4 | PTFE 80 Graphit 20 |
| 5 | PTFE 80 BN 6,75 MoS₂ 6,75 Fe₂O₃ 1,5 PPTA 5 |
| 6 | PTFE 80 BN 9 MoS₂ 9 Fe₂O₃ 2 |
| 7 | PTFE 80 MoS₂ 15· PBA 5 |

Die Herstellung der Materialien kann in bekannter Weise erfolgen:
- Homogenes Aufschlämmen der Füllstoffe und des Polyaramid-Pulvers in Wasser mit Hilfe eines nichtionischen Netzmittels.
- Zugabe einer 30%igen PTFE-Dispersion und homogenes Vermischen.
- Herbeiführung der Koagulation des Gemisches mit Hilfe von Aluminiumnitrat-Lösung.
- Entfernung überschüssigen Wassers und Fertigrühren bis zur beschichtungsgerechten Konsistenz der Masse.
- Einwalzen des Gemisches in das auf Stahl aufgebrachte poröse Bronzegerüst.
- Sintern des PTFE bei 380°C.
- Heißverdichten der Gesamtstruktur durch Walzen.

Buchsen aus diesen Materialien wurden einem Stoßdämpfertest unterzogen und anschließend der Verschleiß ermittelt. Es handelt sich dabei um ein 30h-Prüfprogramm auf der Basis einer Rampenfunktion mit 80 mm Hub und 0,5 Hz. Darüber hinaus wurden die Reibwerte der Materialien unter Tropfölschmierung bei 1000N Belastung und der Gleitgeschwindigkeit von 20 mm/s gemessen.

Die Daten sind in Tabelle 2 zusammengefaßt. Dort sind in Beispiel 1-6 jeweils vergleichbare Materialien mit und ohne Zusatz von Polyaramidpulver gegenübergestellt. Beispiel 7 belegt, daß zur Herbeiführung des erfindungsgemäßen Effekts auch dem PPTA strukturell ähnliche Polymermaterialien geeignet sind.

**Tabelle 2**

| **Beispiel Nr.** | **Verschleiß [µm]** | **Reibwert, geölt** |
|---|---|---|
| 1 | 15 | 0,028 |
| 2 | 42 | 0,019 |
| 3 | 33 | 0,040 |
| 4 | 80 | 0,034 |
| 5 | 7 | 0,025 |
| 6 | 24 | 0,016 |
| 7 | 18 | 0,026 |

Diese Ergebnisse verdeutlichen den positiven Einfluß des Polyaramid-Pulvers auf die Verschleißbeständigkeit und belegen, daß der Reibwert nur geringfügig beeinträchtigt wird.

## Patentansprüche

1. Schichtverbundwerkstoff mit einer metallischen Stützschicht, einer porösen Zwischenschicht und einer darauf aufgebrachten Gleitschicht mit einer Matrix aus PTFE oder PTFE in Kombination mit ETFE, in die Füllstoffe eingelagert sind,
**dadurch gekennzeichnet,**
**dass** die Gleitschicht mindestens ein pulverförmiges Polyaramid enthält,
und **dass** der Anteil des PTFE oder des PTFE zusammen mit ETFE 55 - 90 Vol.%, der Anteil weiterer Füllstoffe 9,5 - 44,5 Vol.% und der Anteil des Polyaramids 0,5 - 10 Vol.% beträgt.

2. Schichtverbundwerkstoff nach Anspruch 1, **dadurch gekennzeichnet, dass** der Anteil des PTFE oder des PTFE zusammen mit ETFE 65 - 80 Vol-%, der Anteil der Füllstoffe 10 - 34 Vol.-% und der Anteil des Polyaramids 2 - 10 Vol.% beträgt.

3. Schichtverbundwerkstoff nach Anspruch 1 oder 2, **dadurch gekennzeichnet, dass** es sich bei dem Polyaramid um Poly-(pphenylenterephthalamid) und/oder Poly-(p-benzamid) handelt.

4. Schichtverbundwerkstoff nach einem der Ansprüche 1 bis 3, **dadurch gekennzeichnet, dass** die Korngröße des Polyaramidspulvers <100 µm beträgt.

5. Schichtverbundwerkstoff nach einem der Ansprüche 1 bis 3, **dadurch gekennzeichnet, dass** die Korngröße des Polyaramidpulvers <50 um beträgt.

6. Schichtverbundwerkstoff nach einem der Ansprüche 1 bis 5, **dadurch gekennzeichnet, dass** der Anteil des ETFE höchstens gleichgroß wie der des PTFE ist.

7. Schichtverbundwerkstoff nach einem der Ansprüche 1 bis 6, **dadurch gekennzeichnet, dass** es sich bei den Füllstoffen um Blei, Bleioxid, Metallsulfide mit Schichtstruktur wie Molybdänsulfid, Metallfluoride, Bomitrid, Graphit, Ruß, Koks, Eisenoxid, einzeln oder zu mehreren, handelt.

8. Schichtverbundwerkstoff nach Anspruch 7, **dadurch gekennzeichnet, dass** zusätzlich Füllstoffe aus einem oder mehreren aus der Gruppe der Hartstoffe, der Pigmente, der Fasermaterialien, der Festschmierstoffe, der Duro- oder Hochtemperaturthermoplaste, Polyimide oder Duroplaste enthalten sind.

9. Schichtverbundwerkstoff nach einem der Ansprüche 7 oder 8, **dadurch gekennzeichnet, dass** 1 - 6 Vol.-% Fe₂O₃ zusammen mit mindestens einem weiteren Füllstoff enthalten sind.

10. Schichtverbundwerkstoff nach einem der Ansprüche 6 bis 9, **dadurch gekennzeichnet, dass** es sich bei den Füllstoffen um ein Gemisch aus Metallsulfiden mit Schichtstruktur, Bomitrid und Fe₂O₃ handelt.

11. Verwendung des Schichtverbundwerkstoffs nach einem der Ansprüche 1 bis 10 für Gleitelemente für den Einsatz in Stoßdämpfern oder anderen hydraulischen Anwendungen.

## Claims

1. A layered composite material with a metallic support layer, a porous intermediate layer, and a sliding layer applied on top of it with a matrix of PTFE or PTFE in combination with ETFE in which fillers are incorporated, **characterized in that** the sliding layer comprises at least one powdered polyaramide and that the amount of PTFE or of PTFE in combination with ETFE is 55 - 90 vol.-%, the amount of other fillers is 9.5 - 44.5 vol.-%, and the amount of polyaramide is 0.5 - 10 vol.-%.

2. The layered composite material according to claim 1, **characterized in that** the amount of PTFE or of PTFE in combination with ETFE is 65 - 80 vol.-%, the amount of fillers is 10 - 34 vol.-%, and the amount of the polyaramide is 2 - 10 vol.-%.

3. The layered composite material according to claim 1 or claim 2, **characterized in that** the polyaramide involves poly-(p-phenyleneterephthalamide) and/or poly-(p-benzamide).

4. The layered composite material according to one of the claims 1 through 3, **characterized in that** the particle size of the polyaramide powder is <100 µm.

5. The layered composite material according to one of the claims 1 through 3, **characterized in that** the particle size of the polyaramide powder is <50 µm.

6. The layered composite material according to one of the claims 1 through 5, **characterized in that** the amount of ETFE is at most equal to the amount of PTFE.

7. The layered composite material according to one of the claims 1 through 6, **characterized in that** the fillers involve lead, lead oxide, metal sulfides with layer structure such as molybdenum sulfide, metal fluoride, boron nitride, graphite, carbon black, coke, iron oxide, individually or several combined.

8. The layered composite material according to claim 7, **characterized in that**, in addition, fillers from one or several of the group of hard materials, pigments, fiber materials, solid lubricants, duro or high-temperature thermoplastic materials, polyimids, or duroplastic materials are comprised.

9. The layered composite material according to one of the claims 7 or 8, **characterized in that** 1 - 6 vol.-% of Fe₂O₃, in combination with at least one other filler, are comprised.

10. The layered composite material according to one of the claims 6 through 9, **characterized in that** the fillers involve a mixture of metal sulfides with layer structure, boron nitride, and Fe₂O₃.

11. A utilization of the layered composite material according to one of the claims 1 through 10 for sliding elements for the use in shock absorbers or other hydraulic applications.

## Revendications

1. Matériau en stratifié, présentant une couche de support métallique, une couche intermédiaire poreuse et une couche de glissement appliquée sur le dessus avec une matrice en PTFE ou PTFE en combinaison avec de l'ETFE, dans lesquelles sont déposées des agents de charge, **caractérisé en ce que** la couche de glissement contient au moins un polyaramide sous forme de poudre et **en ce que** la proportion de PTFE ou de PTFE en combinaison avec de l'ETFE s'élève entre 55 et 90 % en volume et la proportion des autres agents de charge s'élève de 9,5 à 44,5 % en volume et la proportion de polyaramide s'élève de 0,5 à 10 % en volume.

2. Matériau en stratifié selon la revendication 1, **caractérisé en ce que** la proportion de PTFE ou de PTFE avec de l'ETFE s'élève de 65 à 80 % en volume, la proportion de charge s'élève de 10 à 34 % en volume, et la proportion de polyaramide s'élève de 2 à 10 % en volume.

3. Matériau en stratifié selon la revendication 1 ou 2, **caractérisé en ce qu'**il s'agit pour le polyaramide d'un poly-(p-phénylène téréphtalamide) et/ou d'un poly-(p-benzamide).

4. Matériau en stratifié selon l'une quelconque des revendications 1 à 3, **caractérisé en ce que** la taille des particules de la poudre de polyaramide s'élève à < 100 µm.

5. Matériau en stratifié selon l'une quelconque des revendications 1 à 3, **caractérisé en ce que** la taille des particules de la poudre de polyaramide s'élève à < 50 µm.

6. Matériau en stratifié selon l'une quelconque des revendications 1 à 5, **caractérisé en ce que** la proportion de ETFE est au plus égale à celle de PTFE.

7. Matériau composite selon l'une quelconque des revendications 1 à 6, **caractérisé en ce qu'**il s'agit pour les agents de charge, de plomb, d'oxyde de plomb, de sulfure de métal avec une structure en couche comme le sulfure de molybdène, de fluorure de métal, de nitrure de bore, de graphite, de suie, de coke, d'oxyde de fer, seuls ou en mélange.

8. Matériau en stratifié selon la revendication 7, **caractérisé en ce que** des agents de charge complémentaires sont obtenus à partir d'un ou plusieurs groupe(s) se composant de matière solide, de pigment, de matériau fibreux, de lubrifiant solide, de thermoplaste à haute température ou de durothermoplaste, de polyimide ou de duroplaste.

9. Matériau en stratifié selon l'une quelconque des revendications 7 ou 8, **caractérisé en ce que** 1 à 6 % en volume de Fe₂O₃ sont contenus en plus avec au moins un autre agent de charge.

10. Matériau en stratifié selon l'une quelconque des revendications 6 à 9, **caractérisé en ce qu'**il s'agit pour les agents de charge d'un mélange de sulfure de métal avec une structure en couche, de nitrure de bore et de Fe₂O₃.

11. Utilisation d'un Matériau en stratifié selon l'une quelconque des revendications 1 à 10 pour un élément de glissement, pour une mise en place dans des absorbeurs d'énergie ou d'autres applications hydrauliques.
